# EUROPÄISCHE PATENTANMELDUNG

(11) **EP 4 096 152 A1**
(43) Veröffentlichungstag der Anmeldung: **30.11.2022**
(21) Anmeldenummer: 21200191.1
(22) Anmeldetag: 30.09.2021
(51) Int. Cl.: H04L 9/32, H04L 9/08

(54) **VERFAHREN ZUR VERSCHLÜSSELUNG VON DATEN UND VORRICHTUNG MIT EINER APPLIKATION ZUR VERSCHLÜSSELUNG**

(30) Priorität: 27.05.2021 DE 102021205419
(71) Anmelder: Siemens Aktiengesellschaft, 80333 München (DE)
(72) Erfinder: Falk, Rainer, 85586 Poing (DE)

(57) **Zusammenfassung**

Bei dem Verfahren zur Verschlüsselung von Daten wird ein Blindsignaturgenerator (bTA) herangezogen, dem ein mit einem Verblindungsparameter (BP) verblindeter Schlüsselgenerierungsparameter (BKGP) übersendet wird und der mit dem verblindeten Schlüsselgenerierungsparameter (BKGP) mindestens eine verblindete Signatur (BKEY) generiert und ausgibt, wobei die Verblindung der mindestens einen ausgegebenen verblindeten Signatur (BKEY) aufgehoben wird und die mindestens eine Signatur (BKEY) als kryptographisches Schlüsselmaterial herangezogen wird und mittels des kryptographischen Schlüsselmaterials Daten verschlüsselt werden.

Die Vorrichtung weist eine Applikation (nA) zur Verschlüsselung auf, die zur Ausführung der Verfahrensschritte nach dem Verfahren nach einem der vorhergehenden Ansprüche ausgebildet ist.

## Beschreibung

Die Erfindung betrifft ein Verfahren zur Verschlüsselung von Daten sowie eine Vorrichtung mit einer Applikation zur Verschlüsselung von Daten.

In technischen Systemen, insbesondere in Embedded Devices, Steuergeräten oder Servern werden grundlegende Sicherheitsfunktionen wie insbesondere das Bereitstellen kryptografischer Schlüssel mittels Vertrauensankern (engl. = "Trust Anker") bereitgestellt.

Allerdings muss die Kommunikation zwischen einer Software-Applikation oder einer Hardware-Applikation, etwa einem Applikationsprozessor, einerseits und dem Vertrauensanker andererseits geschützt werden, um den Vertrauensanker sicher ins System zu integrieren. Dazu kann die Schnittstelle zum Vertrauensanker physikalisch geschützt sein, insbesondere, indem ein Zugriff für einen Angreifer mittels Vergusses oder mittels unzugänglicher Integration in unzugängliche Lagen einer Leiterplatte oder mittels Integration innerhalb eines Halbleiterbausteins verhindert wird. Alternativ kann der Zugriff auf einen solchen Vertrauensanker mittels eines logischen Schutzes, etwa mittels eines kryptografischen Secure-Channel-Protokolls, geschützt werden. Secure-Channel-Protokolle erlauben grundsätzlich eine kryptographische Realisierung eines sicheren Kanals. Ein physikalischer Schutz hat den Nachteil, dass eine Fehlersuche und eine Reparatur deutlich erschwert sind. Zudem ist die Realisierung eines physikalischen Schutzes sehr aufwändig. Ein logischer Schutz, etwa durch einen sicheren Kanal, ist ebenfalls schwierig zu realisieren, da bereits ein erster kryptografischer Schlüssel vorhanden sein muss, um den sicheren Kanal aufzubauen. Bei solchen Lösungen muss daher bereits ein kryptografischer Schlüssel auf dem zugreifenden Applikationsprozessor oder auf einer zugreifenden Software-Applikation vorliegen, der wiederum geschützt gespeichert werden muss. Eine umfassende Sicherheit ist bei logischem Schutz folglich schwierig zu erlangen.

Es ist daher Aufgabe der Erfindung, ein verbessertes Verfahren zur Verschlüsselung von Daten anzugeben, welches mit einem Vertrauensanker durchführbar ist. Ferner ist es Aufgabe der Erfindung, eine verbesserte Vorrichtung mit einer Applikation zur Verschlüsselung anzugeben, mit der das vorgenannte verbesserte Verfahren zur Verschlüsselung ausführbar ist.

Diese Aufgabe der Erfindung wird mit einem Verfahren zur Verschlüsselung von Daten mit den in Anspruch 1 angegebenen Merkmalen sowie mit einer Vorrichtung mit den in Anspruch 9 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zur Verschlüsselung von Daten wird ein Blindsignaturgenerator herangezogen, dem ein mit einem Verblindungsparameter verblindeter Schlüsselgenerierungsparameter übersendet wird und der mit dem verblindeten Schlüsselgenerierungsparameter mindestens eine mit dem Verblindungsparameter verblindete, d. h. blinde, Signatur generiert und ausgibt. Bei dem erfindungsgemäßen Verfahren wird die Verblindung der mindestens einen ausgegebenen verblindeten Signatur aufgehoben und nachfolgend die mindestens eine Signatur, d. h. die entblindete, also nicht mehr mittels des Verblindungsparameters verblindete, Signatur, als kryptographisches Schlüsselmaterial herangezogen. Bei dem erfindungsgemäßen Verfahren werden mittels des kryptographischen Schlüsselmaterials Daten verschlüsselt. Weiterhin kann das kryptographische Schlüsselmaterial für eine Entschlüsselung, für eine kryptographische Authentisierung oder für einen kryptographischen Integritätsschutz verwendet werden.

Der zum Verblinden des verblindeten Schlüsselgenerierungsparameters herangezogene Verblindungsparameter wird vorzugsweise zufällig ermittelt. Bei jedem Übersenden eines verblindeten Schlüsselgenerierungsparameters kann dabei ein neuer Zufallswert ermittelt werden, sodass selbst bei Anfragen zum gleichen Schlüsselgenerierungsparameter jeweils unterschiedlich verblindete Schlüsselgenerierungsparameter übermittelt werden. Zum erhöhten Schutz der Integrität kann eine Signaturzu einem bestimmten Schlüsselgenerierungsparameter mehrfach angefordert werden, wobei bei jeder Anforderung ein anderer Verblindungsparameter zum Verblinden verwendet wird. Die mehreren verblindeten Signaturen werden aufgehoben und bei Übereinstimmung der entblindeten Signaturen als kryptographisches Schlüsselmaterial herangezogen. Es ist jedoch auch möglich, dass ein bestimmter Verblindungsparameter für mehrere Anfragen mit verblindeten Schlüsselgenerierungsparametern verwendet wird. Der Verblindungsparameter kann insbesondere bei einem Gerätehochlauf, also bei einem Bootvorgang, und/oder nach einem Einspielen eines Firmware-Updates und/oder zeitgesteuert, etwa in regelmäßigen zeitlichen Abständen wie insbesondere stündlich oder täglich, oder abhängig von der Anzahl von damit verblindeten Anfragen aktualisiert werden.

Mittels des erfindungsgemäß herangezogenen Blindsignaturgenerators wird bei dem erfindungsgemäßen Verfahren ein Vertrauensanker realisiert, welcher einen verblindeten Schlüsselgenerierungsparameter erhält und mittels des verblindeten Schlüsselgenerierungsparameters mindestens eine verblindete, d. h. blinde, Signatur generiert und ausgibt. Auf diese Weise werden bei dem erfindungsgemäßen Verfahren innerhalb des Blindsignaturgenerators verblindete Signaturen als kryptographisches Schlüsselmaterial generiert, welche nach dieser Verblindung grundsätzlich ausgelesen werden können, aber als verblindete Signaturen für Angreifer keinerlei Nutzen bieten. Denn Angreifer können aus der verblindeten Signatur nicht die Informationen zu einer Entschlüsselung der mit dem kryptografischen Schlüsselmaterials verschlüsselten Daten erhalten. Folglich kann mittels des Blindsignaturgenerators infolge der Verblindung kryptografisches Schlüsselmaterial sicher generiert und ausgegeben werden, ohne dass die Kommunikation mit dem Blindsignaturgenerator ein taugliches Angriffsziel für Angreifer darstellt. Folglich wird bei dem erfindungsgemäßen Verfahren mittels des Blindsignaturgenerators ein zuverlässiger Vertrauensanker realisiert.

Für eine verblindete, d. h. blinde, Signatur im Sinne der vorliegenden Anmeldung steht eine Vielzahl von Verfahren zur Verfügung. So sind in der Kryptografie blinde Signaturen (engl.: "Blind Signature") bekannt, welche etwa mittels der sogenannten Chaum-Signatur auf Basis des RSA-Verfahrens, mittels der sogenannten Schnorr-Signatur auf Basis des DSA-Verfahrens oder mittels eines sonstigen Verfahrens für blinde Signaturen realisiert sind. Bei diesen blinden Signaturen wird mittels eines privaten kryptografischen Schlüssels ein Datenelement digital signiert, ohne dass das signierte Datenelement dem Signierenden im Klartext bekannt ist. Ihm ist lediglich eine verblindete, d. h. "blinded", Version des zu signierenden Datenelements bekannt. Die bereitgestellte Signatur ist dann ebenfalls verblindet, also eine blinde Signatur. Ein Aufrufer kann, wenn er den für das Verblinden verwendete Verblindungsparameter (auch als Blinding-Parameter bezeichnet) kennt, die Verblindung der bereitgestellten blinden Signatur wieder entfernen, um die reguläre, überprüfbare Signatur zu ermitteln. Mittels des erfindungsgemäßen Verfahrens lassen sich folglich kryptografische Schlüssel zur Verschlüsselung von Daten leicht mit dem Blindsignaturgenerator austauschen, ohne dass die Gefahr besteht, dass bei einem Abhören der Kommunikation mit dem Blindsignaturgenerator zur Entschlüsselung der Daten dienliche Informationen abgehört werden können. Der Blindsignaturgenerator kann dabei einen festen und/oder einen vorgebbaren oder einen konfigurierbaren Signaturschlüssel als privaten kryptografischen Schlüssels zur Berechnung der blinden Signatur abhängig von dem bereitgestellten verblindeten Schlüsselgenerierungsparameter verwenden.

Bei dem erfindungsgemäßen Verfahren wird der Blindsignaturgenerator zweckmäßig in Gestalt eines Vertrauensankers herangezogen. Auf diese Weise lässt sich eine bekannte technische Realisierung eines Vertrauensankers, insbesondere ein Secure Element oder ein Crypto-Controller, bei dem erfindungsgemäßen Verfahren heranziehen, um einen Blindsignaturgenerator zu realisieren. Mittels des erfindungsgemäßen Verfahrens wird folglich ein bekannter Vertrauensanker infolge der Ausbildung als Blindsignaturgenerator als Blindsignaturgenerator im Sinne dieser Erfindung herangezogen.

Bevorzugt wird bei dem erfindungsgemäßen Verfahren die Verblindung nicht vom Blindsignaturgenerator aufgehoben, und die Daten werden nicht vom Blindsignaturgenerator verschlüsselt. Auf diese Weise liegen dem Blindsignaturgenerator die Signatur sowie die mittels des kryptografischen Schlüssels verschlüsselten Daten nicht im Klartext vor. In dieser Weiterbildung können also die Daten des Blindsignaturgenerators von Angreifern grundsätzlich von Angreifern ausgelesen werden, ohne dass die Gefahr einer Kompromittierung der verschlüsselten Daten besteht. In dieser Hinsicht unterscheidet sich der erfindungsgemäß herangezogene Blindsignaturgenerator von einem einfachen Signaturgenerator.

Vorzugsweise ist im Rahmen der vorliegenden Erfindung unter einem Blindsignaturgenerator ein Signaturgenerator zu verstehen, dem der Schlüsselgenerierungsparameter infolge der Verblindung des Schlüsselgenerierungsparameters nicht im Klartext vorliegt.

Zweckmäßig wird bei dem erfindungsgemäßen Verfahren das kryptografische Schlüsselmaterial nicht, insbesondere nicht mit aufgehobener Verblindung, im Blindsignaturgenerator dauerhaft gespeichert. Vorzugsweise wird es, vorzugsweise unmittelbar nachdem es herangezogen worden ist oder nach einer Übertragung, sicher gelöscht oder überschrieben. Auf diese Weise liegt das kryptografische Schlüsselmaterial nicht im Klartext im Blindsignaturgenerator vor. Auf diese Weise wird das kryptografische Schlüsselmaterial besonders sicher gehandhabt. Weiterhin ist es möglich, dass der Verblindungsparameter nicht dauerhaft gespeichert wird. Insbesondere kann der Verblindungsparameter nach Ermitteln der entblindeten Signatur gelöscht oder überschrieben werden.

Bevorzugt umfasst bei dem erfindungsgemäßen Verfahren das kryptographische Schlüsselmaterial einen kryptographischen Schlüssel oder ein kryptographisches Schlüsselpaar.

Geeigneterweise ist bei dem erfindungsgemäßen Verfahren das kryptographische Schlüsselmaterial ein Schlüsselmaterial zur symmetrischen Kryptographie. Alternativ oder zusätzlich ist bei dem erfindungsgemäßen Verfahren das Schlüsselmaterial ein Schlüsselmaterial zur asymmetrischen Kryptographie oder ein weiterer Schlüsselgenerierungsparameter zur deterministischen Generierung eines Schlüsselmaterial zur asymmetrischen Kryptographie. Ein solcher weiterer Schlüsselgenerierungsparameter kann auch als "Private Primary Seed" bezeichnet werden.

In einer besonders bevorzugten Weiterbildung des erfindungsgemäßen Verfahrens wird ein Blindsignaturgenerator herangezogen, welcher ausgebildet ist, die Signatur als RSA-Signatur oder als DSA-Signatur oder als ECDSA-Signatur zu generieren. Bei den vorgenannten Signaturen handelt es sich um Signaturen, welche mit etablierten kryptografischen Verfahren gebildet sind. Auf diese Weise lässt sich das erfindungsgemäße Verfahren mittels etablierter und regelmäßig geprüfter und demzufolge besonders sicherer kryptografischer Signierverfahren ausführen, sodass das erfindungsgemäße Verfahren besonders sicher durchführbar ist. Ebenso können jedoch auch andere Signaturverfahren, insbesondere Post-Quantum-geeignete Signaturverfahren wie Falcon, Crystals-Dilithium, Rainbow oder GeMSS verwendet werden.

Bei dem erfindungsgemäßen Verfahren wird vorzugsweise ein Blindsignaturgenerator herangezogen, der die verblindete Signatur mittels eines Prüfwerts, insbesondere einer Prüfsumme, und/oder einer weiteren digitalen Signatur schützt. In dieser Weiterbildung kann der Anwender des erfindungsgemäßen Verfahrens die Integrität und die Authentizität der verblindeten Signatur einer Überprüfung unterziehen und abhängig von dem Ergebnis der Überprüfung die bereitgestellte verblindete Signatur akzeptieren und vorzugsweise verwenden oder verwerfen.

Die erfindungsgemäße Vorrichtung weist eine Applikation, die zur Ausführung der Verfahrensschritte nach dem erfindungsgemäßen Verfahren zur Verschlüsselung wie vorstehend erläutert ausgebildet ist, auf. Die erfindungsgemäße Vorrichtung weist zudem einen Vertrauensanker auf. Bei der erfindungsgemäßen Vorrichtung ist die Applikation ausgebildet, dem Vertrauensanker einen mit einem Verblindungsparameter verblindeten Schlüsselgenerierungsparameter zu übersenden, und der Vertrauensanker weist bei der erfindungsgemäßen Vorrichtung einen Blindsignaturgenerator auf, der ausgebildet ist, mittels des verblindeten Schlüsselgenerierungsparameters eine verblindete Signatur zu generieren und die verblindete Signatur an die Applikation zu senden, wobei die Applikation ein Entblindungsmodul aufweist, welches ausgebildet ist, die Verblindung der verblindeten Signatur aufzuheben und die Signatur, d. h. die entblindete, also nicht mehr mittels des Verblindungsparameters verblindete, Signatur, als kryptografisches Schlüsselmaterial heranzuziehen, wobei die Applikation ein Verschlüsselungsmodul aufweist, das ausgebildet ist, mittels des kryptografischen Schlüsselmaterials Daten zu verschlüsseln. Mittels der erfindungsgemäßen Vorrichtung ist folglich eine Vorrichtung mit einem Vertrauensanker in Gestalt eines Blindsignaturgenerators realisiert. Hinsichtlich der Vorrichtung ergeben sich damit folglich die gleichen Vorteile wie bereits bei der Ausführung des erfindungsgemäßen Verfahrens zuvor erläutert.

Bei dem Verschlüsselungsmodul der erfindungsgemäßen Vorrichtung handelt es sich bevorzugt um eine Software oder einen Softwareteil mittels welcher Daten in an sich bekannter Weise mittels symmetrischer oder asymmetrischer Kryptographie verschlüsselt werden können.

Zweckmäßig bilden bei der erfindungsgemäßen Vorrichtung die Daten einen Schlüsselspeicher, insbesondere einen OpenSSL-Key-Store oder ein Dateisystem oder eine Datei. Insbesondere können Applikationen für die Nutzung von Schlüsselspeichern wie insbesondere OpenSSL-Key-Stores, kryptografische Schlüssel erfordern, um diese zu nutzen. Gleichermaßen können zur Entschlüsselung von verschlüsselten Dateisystemen oder von verschlüsselten Dateien kryptografische Schlüssel erforderlich sein. Bei der erfindungsgemäßen Vorrichtung lässt sich mittels des Blindsignaturgenerators folglich kryptografisches Schlüsselmaterial für solche Anwendungszwecke leicht realisieren.

Bei einer bevorzugten Weiterbildung der erfindungsgemäßen Vorrichtung ist der Vertrauensanker als Digitalschaltung, vorzugsweise als programmierbare Digitalschaltung, ausgebildet. Alternativ oder zusätzlich ist bei der erfindungsgemäßen Vorrichtung der Vertrauensanker mit einer Software oder Firmware, insbesondere mit einer Enklave mit einer Software und/oder mittels einer oder mehrerer Betriebssystemfunktionen, realisiert. Entsprechend ist bei der erfindungsgemäßen Vorrichtung der Vertrauensanker als Hardware-Element oder als Software-Element ausbildbar. Die Blindsignaturgenerator-Funktionalität kann auf dem Vertrauensanker dabei in Hardware, z. B. als Digitalschaltung, als Firmware oder als Hardware-Software-Codesign mit einem Digitalschaltungsanteil und einem Firmwareanteil realisiert sein.

Nachfolgend wird die Erfindung anhand eines in der Zeichnung dargestellten Ausführungsbeispiels näher erläutert. Es zeigen:
- Figur 1: eine erfindungsgemäße Vorrichtung mit einer Applikation zur Verschlüsselung und mit einem Vertrauensanker schematisch in einer Prinzipskizze sowie
- Figur 2: das erfindungsgemäße Verfahren zur Verschlüsselung von Daten schematisch in einem Verfahrensdiagramm.

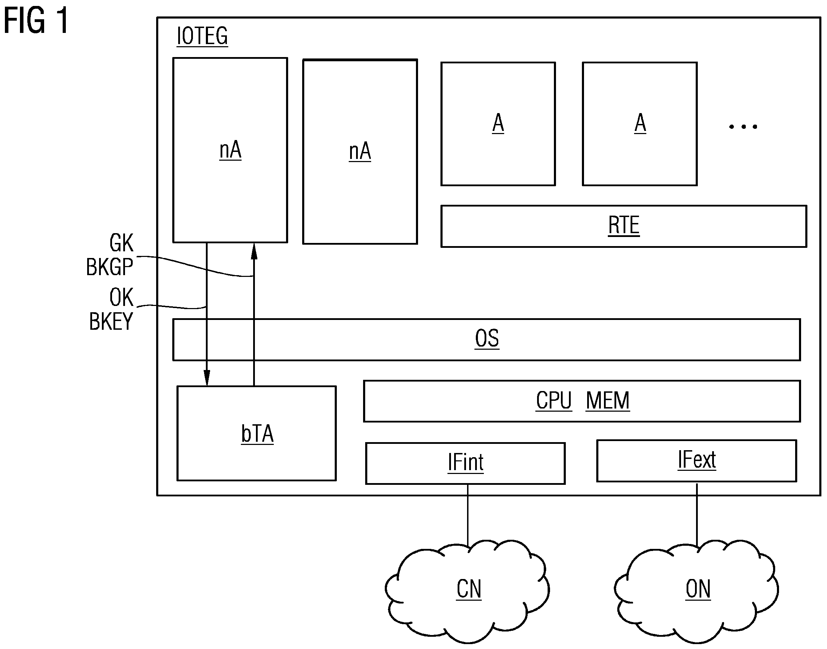

Die in Figur 1 dargestellte erfindungsgemäße Vorrichtung ist ein IOT-Edge-Gateway IOTEG, auf welchem mehrere Applikationen in Form von Apps, hier in Form von nativen Apps nA und nachladbaren Apps A, ausgeführt werden können. Die nachladbaren Apps A werden durch eine Laufzeitumgebung RTE ausgeführt, beispielsweise eine Container-Ausführungsumgebung oder eine Java- oder Web Assembly-Ausführungsumgebung. Die nativen Apps nA hingegen laufen auf einem Betriebssystem OS, welches die Hardware des IOT-Edge-Gateway IOTEG, die insbesondere einen Prozessor CPU und einen Speicher MEM umfasst, betreibt. Das IOT-Edge-Gateway IOTEG umfasst zudem zwei Netzwerkschnittstellen IFint, IFext zum Verbinden des IOT-Edge-Gateway IOTEG mit einem Steuerungsnetzwerk CN und mit einem offenen Netzwerk ON.

Eine der nativen Apps nA benötigt einen bestimmten kryptografischen Schlüssel, um im gezeigten Ausführungsbeispiel einen OpenSSL-Key-Store, also einen Schlüsselspeicher, nutzen zu können. In weiteren, nicht eigens dargestellten Ausführungsbeispielen benötigt die native App nA einen kryptografischen Schlüssel, um ein Dateisystem oder eine verschlüsselte Datei nutzen zu können.

Zum Erhalt des kryptografischen Schlüssels ruft die native App nA einen Blind-Trust-Anchor bTA, d h. einen Vertrauensanker, auf. Dazu wird eine Funktion GK aufgerufen, der ein von der Applikation gebildeter blinder, d. h. mit einem Verblindungsparameter BP verblindeter, Schlüsselgenerierungsparameter BKGP übergeben wird. Der Blind-Trust-Anchor bTA führt eine erfindungsgemäße blinde Schlüsselbildung mittels einer deterministischen Schlüsselgenerierungsfunktion oder Schlüsselableitung durch, um den blinden Schlüssel BKEY zu generieren. Dazu wird im dargestellten Ausführungsbeispiel eine blinde Signaturfunktion gewissermaßen zweckentfremdet, indem ein privater Signaturschlüssel als kryptografischer Schlüssel herangezogen wird. Dabei wird der blinde Schlüsselgenerierungsparameter signiert und die blinde Signatur wird als blinder Schlüssel BKEY interpretiert und ausgegeben. Dieser blinde Schlüssel BKEY wird der aufrufenden Applikation, d. h. der nativen App nA, als Teil einer Antwort OK bereitgestellt. Die native App nA ermittelt nun den eigentlichen Schlüssel K, indem sie die Verblindung, d. h. das Blinding, des blinden Schlüssels BKEY mittels eines Entblindungsvorgangs UNBLIND aufhebt.

Der mittels des Entblindungsvorgangs UNBLIND entblindete Schlüssel K kann insbesondere ein symmetrischer Schlüssel sein oder eine Bit-Folge, die als Passwort oder als PIN verwendbar ist. Der Schlüssel K kann jedoch allgemein auch ein privater Schlüssel, ein öffentlicher Schlüssel oder ein Tupel aus privatem und öffentlichem Schlüssel für ein asymmetrisches Kryptographieverfahren oder ein weiterer Schlüsselgenerierungsparameter im Sinne eines "Private Primary Seed" für eine deterministische Generierung eines Schlüsselpaars für ein asymmetrisches Kryptographieverfahren sein.

Die blinde, deterministische Schlüsselgenerierung des Blind-Trust-Anchors bTA beantwortet den Aufruf der Funktion GK mittels Generierung des blinden Schlüssels BKEY abhängig vom blinden Schlüsselgenerierungsparameter BKGP. Der Blind-Trust-Anchor bTA kann mehrere unterschiedliche Schlüssel, welche beispielsweise als kryptographische Geräteschlüssel herangezogen werden, für unterschiedliche native Apps nA oder für unterschiedliche Verwendungszwecke bilden. Dazu kann dem Blind-Trust-Anchor bTA jeweils ein dem jeweiligen Anwendungszweck zugeordneter blinder Schlüsselgenerierungsparameter BKBP übergeben werden.

Der Blind-Trust-Anchor bTA kann insbesondere als Digitalschaltung auf einem Halbleiterbaustein, beispielsweise einem ASIC, einem IC, einem Cryptocontroller oder einem Security-IC, insbesondere als programmierbare Digitalschaltung, etwa ein FPGA oder ein Programmable Logic Device PLD, oder durch eine Software in einer Enklave, etwa einem Intel-SGX, einer RAM-Trust-Zone oder einer Trusted Execution Environment TEE, oder in einer Betriebssystemfunktion oder allgemein einer softwarebasierten Funktion realisiert sein.

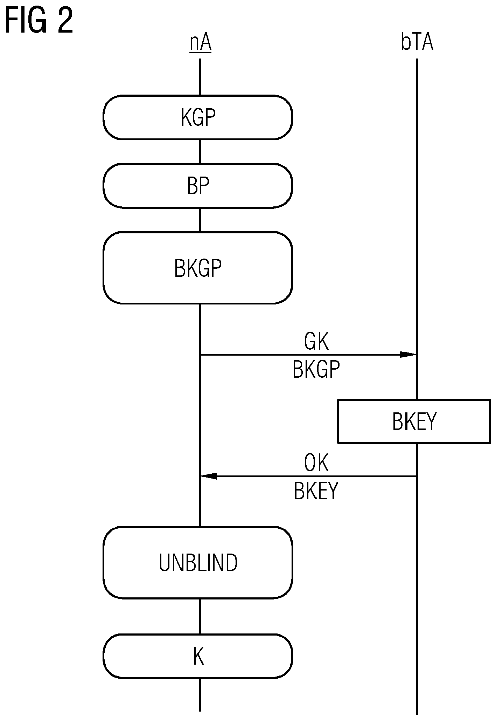

Die Kommunikation zwischen nativer App nA und Blind-Trust-Anchor bTA ist in Fig. 2 detailliert:
Der Aufrufer der Funktion GK zur Anforderung eines verblindeten Schlüssels BKEY, hier die native App nA, ermittelt erfindungsgemäß zunächst einen zufälligen oder pseudozufälligen Schlüsselgenerierungsparameter KGP und einen Verblindungsparameter BP. Die native App nA ermittelt abhängig vom Schlüsselgenerierungsparameter KGP und dem Verblindungsparameter BP den blinden Schlüsselgenerierungsparameter BKGP. Die native App nA ruft nun den blinden Schlüssel BKEY ab, indem die native App nA den blinden Schlüsselgenerierungsparameter BKGP an den Blind-Trust-Anchor bTA übergibt. Der Blind-Trust-Anchor bTA generiert mittels des blinden Schlüsselgenerierungsparameters BKGP den blinden Schlüssel BKEY und übermittelt ihn mittels einer Antwort OK an die native App nA. Die native App nA erhält den blinden abgeleiteten Schlüssel BKEY. Unter Verwendung des Verblindungsparameters BP bildet die native App nA den Schlüssel K im Klartext aus dem blinden Schlüssel BKEY, indem die native App nA einen Entblindungsvorgang UNBLIND durchführt. Die native App NA kann nun den Schlüssel K verwenden, beispielsweise für eine Verschlüsselung oder für einen kryptografischen Integritätsschutz.

Im gezeigten Ausführungsbeispiel ist es möglich, dass die Korrektheit des ermittelten Schlüssels K erst anhand von Testdaten überprüft wird, beispielsweise einer Nutzung des Schlüssels K, um verschlüsselte, bekannte Testdaten zu entschlüsseln oder um eine kryptographische Prüfsumme zu überprüfen und den Schlüssel K nur nach erfolgter Überprüfung regulär einzusetzen, beispielsweise zum Verschlüsseln von operativen Daten und/oder zum Entschlüsseln von weiteren konfigurierten, in verschlüsselter Form gespeicherten Schlüsseln. Die blinde Schlüsselgenerierungsfunktion wird vom Blind-Trust-Anchor bTA verwendet, um den blinden Schlüssel BKEY mittels einer Antwort OK bereitstellen zu können. Dazu wird die Funktion GK eingesetzt, die einen blinden Schlüssel BKEY abhängig von einem blinden Schlüsselableitungsparameter BKGP, der im Rahmen der vorliegenden Erfindung auch als blinder Schlüsselgenerierungsparameter bezeichnet wird, anfordert. Der Blind-Trust-Anchor bTA ist vorzugsweise Hardware-basiert oder ein Hardware-gebundener Vertrauensanker.

Optional kann bei dem gezeigten Ausführungsbeispiel der blinde Schlüssel BKEY durch eine kryptografische Prüfsumme integritätsgeschützt und authentisiert sein. Die kryptografische Prüfsumme kann eine herkömmliche weitere digitale Signatur oder eine weitere blinde Signatur oder ein Nachrichtenauthentisierungscode (eng. = "Message Authentication-Code") sein. Die kryptografische Prüfsumme wird abhängig vom blinden Schlüssel BKEY und vom blinden Schlüsselgenerierungsparameter, d. h. vom blinden Schlüsselableitungsparameter BKGP, gebildet. Das hat den Vorteil, dass der Aufrufer die Integrität und Authentizität des gebildeten Schlüssels BKEY prüfen kann und abhängig vom Ergebnis den bereitgestellten blinden Schlüssel BKEY akzeptieren und verwenden oder verwerfen kann. Als Schlüsselableitungsfunktion wird im gezeigten Ausführungsbeispiel eine RSA-Signatur oder eine deterministische Variante einer DSA- oder ECDSA-Signatur verwendet.

## Patentansprüche

1. Verfahren zur Verschlüsselung von Daten, bei welchem ein Blindsignaturgenerator (bTA) herangezogen wird, dem ein mit einem Verblindungsparameter (BP) verblindeter Schlüsselgenerierungsparameter (BKGP) übersendet wird und der mit dem verblindeten Schlüsselgenerierungsparameter (BKGP) mindestens eine verblindete Signatur (BKEY) generiert und ausgibt, wobei bei dem Verfahren die Verblindung der mindestens einen ausgegebenen verblindeten Signatur (BKEY) aufgehoben wird und die mindestens eine Signatur (K) als kryptographisches Schlüsselmaterial herangezogen wird und mittels des kryptographischen Schlüsselmaterials Daten verschlüsselt werden.

2. Verfahren zur Verschlüsselung von Daten, bei welchem ein Blindsignaturgenerator (bTA) in Gestalt eines Vertrauensankers herangezogen wird.

3. Verfahren nach einem der vorhergehenden Ansprüche, bei welchem die Verblindung nicht vom Blindsignaturgenerator (bTA) aufgehoben wird und die Daten nicht vom Blindsignaturgenerator (bTA) verschlüsselt werden.

4. Verfahren nach einem der vorhergehenden Ansprüche, bei welchem das kryptographische Schlüsselmaterial (K) einen kryptographischen Schlüssel oder ein kryptographisches Schlüsselpaar umfasst.

5. Verfahren nach einem der vorhergehenden Ansprüche, bei welchem das kryptographische Schlüsselmaterial ein Schlüsselmaterial zur symmetrischen und/oder zur asymmetrischen Kryptographie ist oder umfasst.

6. Verfahren nach einem der vorhergehenden Ansprüche, bei welchem ein Blindsignaturgenerator (bTA) herangezogen wird, der ausgebildet ist, die verblindete Signatur (BKEY) als RSA-Signatur oder als DSA-Signatur oder als ECDSA-Signatur zu generieren.

7. Verfahren nach einem der vorhergehenden Ansprüche, bei welchem ein Blindsignaturgenerator (bTA) herangezogen wird, der die mindestens eine verblindete Signatur (BKEY) mittels eines Prüfwertes, insbesondere einer Prüfsumme, und/oder einer weiteren digitalen Signatur schützt.

8. Verfahren nach einem der vorhergehenden Ansprüche, welches mittels einer Applikation (nA) einer Vorrichtung (IOTEG) durchgeführt wird, wobei die Vorrichtung den Blindsignaturgenerator aufweist.

9. Vorrichtung mit einer Applikation (nA) zur Verschlüsselung, die zur Ausführung der Verfahrensschritte nach dem Verfahren nach einem der vorhergehenden Ansprüche ausgebildet ist, und einem Vertrauensanker (bTA), bei welcher die Applikation (nA) ausgebildet ist, dem Vertrauensanker (bTA) einen mit einem Verblindungsparameter (BP) verblindeten Schlüsselgenerierungsparameter (BKGP) zu übersenden und der Vertrauensanker (bTA) einen Blindsignaturgenerator aufweist, der ausgebildet ist, mit dem verblindeten Schlüsselgenerierungsparameter (BKGP) eine verblindete Signatur (BKEY) zu generieren und die verblindete Signatur (BKEY) an die Applikation (nA) zu senden, wobei die Applikation (nA) ein Entblindungsmodul aufweist, welches ausgebildet ist, die Verblindung der verblindeten Signatur (BKEY) aufzuheben und die Signatur (K) als kryptographisches Schlüsselmaterial heranzuziehen, wobei die Applikation ein Verschlüsselungsmodul aufweist, welches ausgebildet ist, mittels des kryptographischen Schlüsselmaterials Daten zu verschlüsseln.

10. Vorrichtung nach einem der vorhergehenden Ansprüche, bei welchem die Daten einen Schlüsselspeicher, insbesondere einen OpenSSL-Key-Store, oder ein Dateisystem oder eine Datei, bilden.

11. Vorrichtung nach einem der vorhergehenden Ansprüche, bei welchem die Vorrichtung (IOTEG) ein Embedded Device und/oder ein Steuergerät und/oder ein IPC und/oder ein Server und/oder ein IoT-Edge-Gateway ist oder aufweist.

12. Vorrichtung nach einem der vorhergehenden Ansprüche, bei welchem der Vertrauensanker (bTA) als eine oder mit einer Digitalschaltung, vorzugsweise als programmierbare Digitalschaltung, ausgebildet ist.

13. Vorrichtung nach einem der vorhergehenden Ansprüche, bei welchem der Vertrauensanker (bTA) mittels einer Software, insbesondere einer Enklave mit einer Software und/oder einer oder mehrerer Betriebssystemfunktionen, realisiert ist.
